# EUROPEAN PATENT APPLICATION

(11) **EP 2 937 213 A1**
(43) Date of publication of application: **28.10.2015**
(21) Application number: 15164695.7
(22) Date of filing: 22.04.2015
(51) Int. Cl.: B32B 5/00

(54) **ELASTICIZED STRUCTURE AND PROCESS FOR MAKING SAID ELASTICIZED STRUCTURE**

(30) Priority: 24.04.2014 IT VR20140102
(71) Applicant: Dainese S.p.A., 36060 Molvena (VI) (IT)
(72) Inventor: Zanotto, Stefano, 36060 Molvena, Vicenza (IT)
(74) Representative: Manfrin, Marta

(57) **Abstract**

The present disclosure relates to an elasticized structure (1) including a patch (12) having a first face (13) and a second face (15); and a thread (14) made of an at least partially elastic material. The thread (14) is associated with the second face of the patch (12) in at least a first fixing zone (160 and at least a second fixing zone (18). The elasticized structure (1) is adapted to assume a tensioned position and a rest position. in the tensioned position, the patch (12) is in a condition at least partially stretched and the thread (14) is in a condition of elastic deformation, while, in said rest position, the thread (14) exerts a pulling force on the patch (12) by means of the first fixing zone (16) and the second zone fixing (18), and the patch (12) has a hump (30) situated between the first fixing zone (16) and the second fixing zone (18).

## Description

The present disclosure relates in general to an elasticized structure, namely a structure (for example a textile or similar structure) which is rendered elastic by using a material having elastic properties, namely a material which is able to assume a deformed state from an initial state owing to a deforming action and return to the initial state once the deforming action has ceased.

The elasticized structure according to the present disclosure is suitable in general for use in covering or protective elements for the human body or for articles in general, namely, for example, in the clothing sector as a garment or part of a garment for obtaining improved adherence to the body of a user, in the furnishing sector as a cover or part of a cover for example for divan settees or beds, in the motor-vehicle sector as a cover or part of a cover for seats or child seats, and similar applications where a structure is rendered elastic so as to adhere more closely to an underlying body.

A process for obtaining an elasticized structure envisages the following production steps:
- providing a patch made of leather;
- superimposing the leather patch on an elastic layer, in particular, for example, made of elastic fabric;
- keeping the leather patch in the superimposed condition on the elastic layer, tensioning the leather patch and the elastic layer and fixing them in the taut condition on a support frame where the elastic layer is elastically deformed so as to be fixed to the frame;
- forming pairs of seams, which are substantially parallel to each other, or a single closed-line seam such as to define a predetermined pattern, where each seam joins and ties together the leather patch and the elastic layer;
- cutting only the elastic layer, and not the leather patch, on the outside of the seam, namely, in the case of a pair of seams, on an outer side of each seam opposite to that of the other seam, or in the case of a single seam, around the closed line of the seam;
- removing from the support frame the leather patch and the elastic layer.

Upon separation from the frame, the elastic later returns elastically into an undeformed condition and draws with it the leather patch owing to the fastening provided by the seams. This results in the formation of a hump or protrusion between the two parallel seams or inside the closed-line seam which defines a particular pattern on the leather.

With the process described above it possible to obtain a localized elastic effect distributed over zones pre-chosen as required or in accordance with a predefined distribution pattern of elastic zones.

The author of the present disclosure has recognized that the technique described here for forming the elasticized textile structure is advantageous from many points of view, and in particular can be used effectively when it is required to provide many varied patterns close together. In fact, in this case, it is possible to use a single elastic layer for all the patterns, which is then cut along the sides of the seams or around the seams. In this way a plurality of patterns close to each other are obtained.

However, when the seam patterns are arranged spaced, namely are spread out in various zones of an article of clothing, cutting of the elastic layer, or the provision of a plurality of elastic layers to be cut in each isolated zone, may be a long and laborious operation. In fact, for example a cutting tool must be displaced in each case opposite the seams, so as to obtain the patterns at the predetermined points. The present disclosure is based on the technical problem of providing an elasticized structure, the design of which is able to overcome the aforementioned drawback, namely may be more easily provided in the case of patterns with isolated seams arranged spaced from each other and/or which is able to achieve further advantages.

This is obtained by providing an elasticized structure according to the independent claim 1. The solution to the technical problem is also provided by a process according to claim 12. Secondary characteristics of the subject of the present disclosure are defined in the corresponding dependent claims.

According to an aspect of the present disclosure, instead of an elastic layer such as that described above, a thread of an at least partially elastic material is used. This thread may be joined to an overlying patch in a taut condition. As a result the layer of elastic material may be absent and the pulling action on the patch may be obtained by the thread. In fact, a first point or zone of the thread is joined to the patch in a first fixing zone, and a second point or zone of the thread, adjacent to the first point, is joined to the patch in a second fixing zone, and the thread section between the first point and the second point is under tension when the patch is taut so that, once the tension is released, a hump is formed on the patch between the first fixing zone and the second fixing zone.

The term "thread" or "tensioning thread" is understood, in connection with the present disclosure, as meaning an elongated, thread-like or ribbon-like element, or an element with similar form which is elongated or may be elongated in a longitudinal direction and has elastic properties and which may be joined to the patch in a first fixing zone and a second fixing zone of the patch. The thread may also be understood as being a filament obtained from the joining or grouping together of several threads or fibres.

With respect to a longitudinal direction of the same thread, the first zone and the second zone for fixing to the patch are therefore arranged one after another. In fact, as mentioned, a first point of the thread is fixed to the first zone and a second point, situated thereafter in the longitudinal direction of the same thread, is fixed to the second fixing zone.

Even more particularly, the thread is fixed to the patch in the first fixing zone and in the second fixing zone, so as to be able to exert a pulling force on the patch between the first fixing zone and the second fixing zone.

In particular, the thread is fixed so that, when the thread is elastically deformed, the patch, between the first fixing zone and the second fixing zone, is in a substantially flat tensioned condition. When the elastic deformation of the thread ceases, the thread draws the patch along with it and causes formation of a hump confined between the first fixing zone and the second fixing zone.

Therefore, when the elastic deformation of the thread ceases, the patch has a hump confined in a zone between the first fixing zone and the second fixing zone, and sections of the patch which are substantially flat, and therefore without humps, are present along the sides of the first fixing zone and the second fixing zone.

In other words, in the elasticized structure according to the present disclosure, the patch has, in a rest condition, a fold or protrusion or hump only in the zone situated between the first fixing zone and the second fixing zone and, alongside the fixing zones, the presence of humps may be avoided.

In connection with the present disclosure, the term "fixing zone" is therefore understood as meaning a region in which a stable joint between the thread and patch is obtained such as to allow a pulling force to be applied to the patch. In one embodiment, each fixing zone includes a plurality of connection points arranged in a sequence, row or series, at a mutual distance one after another in the series. The two fixing zones are arranged facing each other so that the thread extends in a zigzag or with a similar pattern, for example sinusoidal pattern, alternately between one connection point of the first fixing zone and an opposite connection point of the second fixing zone. Consequently, when the patch with thread is viewed in plan view, the patch can be seen as having a zigzag or sinusoidal seam or a similar seam obtained by sewing points arranged in two rows.

Joining between the thread and the patch may be performed directly, or a further layer or several layers, for example made of fabric or other material, may be arranged between the thread and the patch, for example in order to reinforce the joint. In other words, considered from another point of view, the patch may be formed by several layers of material.

In one embodiment, in order to favour fixing together of the patch and the thread, the thread is stitched to the patch. In this case the thread is a thread suitable being sewn together with another thread. Consequently the first fixing zone and/or the second fixing zones represent a series of sewing points or a seam extending transversely between the patch and the thread. Consequently, the thread may be joined to the patch by means of sewing threads.

The sewing threads are interlaced, knotted or tied together with the thread and joining together may be performed using a single sewing machine. It is to be understood that a person skilled in the art may be acquainted with a plurality of methods for tying or joining the thread to the patch by means of sewing.

In particular, for this purpose a so-called double-needle sewing machine may be used. In particular, the sewing machine is configured to include two sewing needles arranged parallel and provided with associated sewing thread and a single crochet hook. The crochet hook is provided with the thread which, as mentioned, is an at least partially elastic thread. The crochet hook is configured to hold each of the sewing threads of the needles, so as to obtain the two zones for fixing the thread together with the patch. In this embodiment, the thread extends in a zigzag or with a similar pattern, for example sinusoidal or undulating pattern, between the first fixing zone and the second fixing zone.

in one embodiment, the patch is made of leather which offers a suitable degree of protection in the event of use of the elasticized structure in a motorcyclist's suit.

It is understood that the patch may also be made using other fabrics, such as a non-woven fabric, or a partially elastic fabric.

The subject of the present disclosure may provide a number of significant advantages.

A first advantage consists in the fact that it is possible to obtain an elastic structure with non-consecutive humps and also irregular or irregularly spaced humps. In other words it is possible to have in the elasticized structure a patch with substantially isolated humps. This may be obtained owing to the fact that the elastic deformation of the thread is self-contained (confined in a zone between the first fixing zone and the second fixing zone) and may be independent of an elastic deformation of another thread which is located adjacent and is fixed in the same manner to the patch.

Therefore, it is possible to provide an elasticized structure in which the patch may have folds or protrusions or humps which are isolated, independent and/or not consecutive and which may be arranged at a mutual distance, namely with relative spacing, and not in a compact manner. In this case, if a leather patch is used, it may have a relatively high thickness (without the need for thinning) compatible with a use for protective purposes as required in the sports clothing sector and at the same time have a localized elasticity.

Moreover, the thread may be easily joined, for example by means of sewing, to the patch; therefore, using a sewing machine, it is possible to join the thread to the patch while keeping the thread in a condition of elastic deformation at the moment of fixing, and releasing the thread after joining, so that the thread returns into the original undeformed condition, drawing the patch also along with it. Humps or protrusions may therefore be formed using a single sewing machine which joins the thread to the patch by means of sewing.

Further advantages of this embodiment consist, for example, in the possibility of obtaining an elasticity which can be easily located, by means of a single thread, namely an elasticity which is localized and distributed in zones chosen beforehand as required or in accordance with a predefined distribution pattern of elastic zones. A further advantage consists in the possibility of using the elasticized structure, for example as an insert, in an article of clothing or in an accessory of an article of clothing. In this case it is possible to obtain a localized adaptation of the article of clothing, or the accessory, also to very small parts, such as the fingers of a hand in a glove. For example, the thread is joined to the leather of the glove on each finger of the glove.

A further advantage consists in the fact that, when using the thread in an article, such as a garment, an article of clothing or an accessory thereof or in any article where the elasticized structure is used, there is the possibility of using a reduced amount of elastic material with a considerable reduction or limitation of the overall weight of the article.

Owing to the localized distribution of the elastic tensioning threads it also possible to obtain a localized or spatially precise elimination of folds which are formed in specific points of an article of clothing, such as a motorcyclist's suit or other article having a covering function.

Further advantages, characteristic features and modes of use forming the subject of the present disclosure will become clear from the following detailed description of a number of preferred embodiments thereof, provided by way of a non-limiting example.

It is evident, however, that each embodiment forming the subject of the present disclosure may have one or more of the advantages listed above; in any case it is not required that each embodiment should have simultaneously all the advantages listed.

Reference will be made to the figures of the accompanying drawings in which:
- Figure 1 shows a view, from a first side, of an elasticized structure according to an embodiment of the present disclosure;
- Figure 2 shows a view, from a second side, of an elasticized structure according to an embodiment of the present disclosure;
- Figure 3 shows a cross-sectional view along the line III-III of Figure 1;
- Figure 4A a shows a view, on a larger scale, of a detail IV of Figure 3;
- Figure 4B a shows a view, on a larger scale, of a detail IV of Figure 3 in a different condition compared to Figure 4A;
- Figure 5 shows a view, on a larger scale, from a second side, of a detail of an elasticized structure according to an embodiment of the present disclosure;
- Figure 6 shows a view, on a larger scale, from a first side, of a detail of an elasticized structure according to an embodiment of the present disclosure;
- Figure 7 shows a view of a motorcyclist's suit provided with one or more elasticized structures according to an embodiment of the present disclosure;
- Figure 8 shows a glove provided with one or more elasticized structures according to an embodiment of the present disclosure;
- Figure 9 shows a detail of a sewing machine used for forming a seam in an elasticized structure according to an embodiment of the present disclosure.

With reference initially to the attached figures, the reference number 1 denotes an elasticized structure according to the present disclosure.

In detail, the elasticized structure 1 is particularly suitable for being used in a garment such as a motorcyclist's suit, in particular in zones of the garment where a particular adherence of the garment to a zone of the body is required.

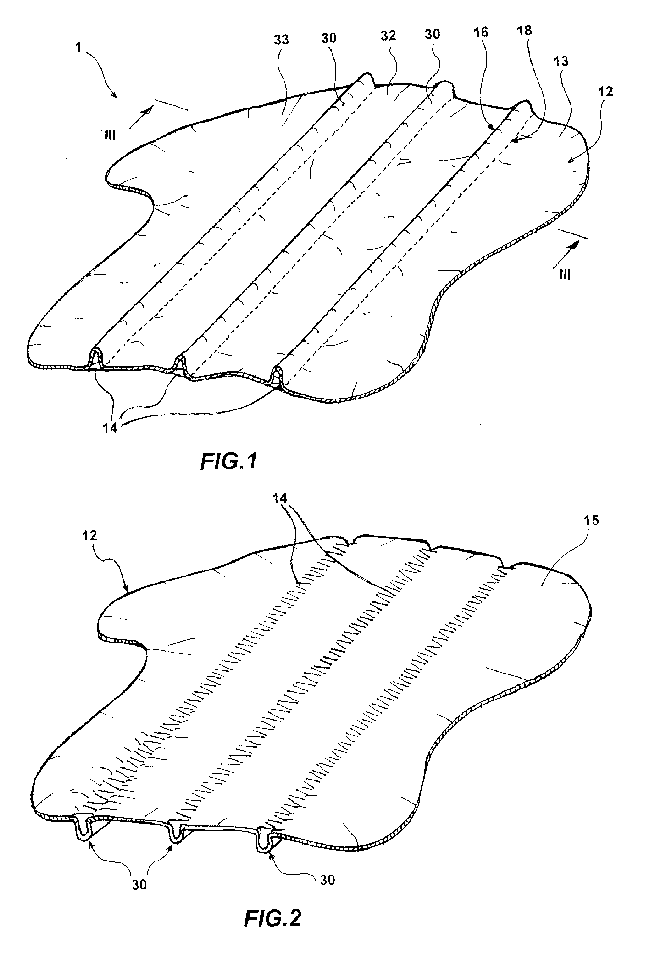

In particular, as can be seen in Figures 1-5, the elasticized structure 1 includes a patch 12, in the example preferably made of leather which, when it is operative or in use in a motorcyclist's suit, is situated on an outer or exposed side. The patch 12 has a first face 13, or decorative side, directed outwards and a second face 15, or skin side or non-decorative side, directed towards the inside of the garment. The elasticized structure 1 includes a thread 14 made of at least partially elastic material. In particular, the thread 14 is a single thread associated with or fixed to the second face 15 of the patch 12 in at least one first fixing zone 16 and in at least one second fixing zone 18. Basically the thread is located confined in a zone 15 situated between the first fixing zone 16 and the second fixing zone 18.

The elasticized structure 1 is designed to assume a tensioning - or tensioned - position and a rest position. More particularly, in the tensioned position, the patch 12 is in a condition at least partially tensioned in a direction substantially parallel to the face 13 or the face 15, and the thread 14 is in a condition of elastic deformation. In the rest position, the thread 14 exerts a pulling force on the patch 12 by means of, or between, the first fixing zone 16 and the second fixing zone 18 (tending to move the first fixing zone 16 closer to the second fixing zone 18). Consequently the patch 12 has a hump 30 situated between the first fixing zone 16 and the second fixing zone 18. Basically, in said rest position, the thread 14 is in a stable condition of absence of elastic deformation and, in said rest position, a direction along which a pulling action by the thread 14 is active is a direction coinciding with a direction of a portion of said thread 14 situated between the first portion, region or point of the thread 14 and the second portion, region or point of said thread 14.

In other words, this relationship between the patch 12 and the thread 14 allows the patch 12 to be tensioned in a operative or tensioned condition, for example by taking hold of the patch 12 along its perimetral edges and pulling it so as to obtain stretching of each hump 30 and a corresponding elastic deformation of each thread 14.

Releasing the patch 12 from the tension, the thread 14 returns elastically into the undeformed condition and the patch 12, owing to the constraint determined by fixing of the first fixing zone, forms again the hump 30. The patch 12 is in fact drawn by the thread 14 itself so as to bulge and form the hump 30.

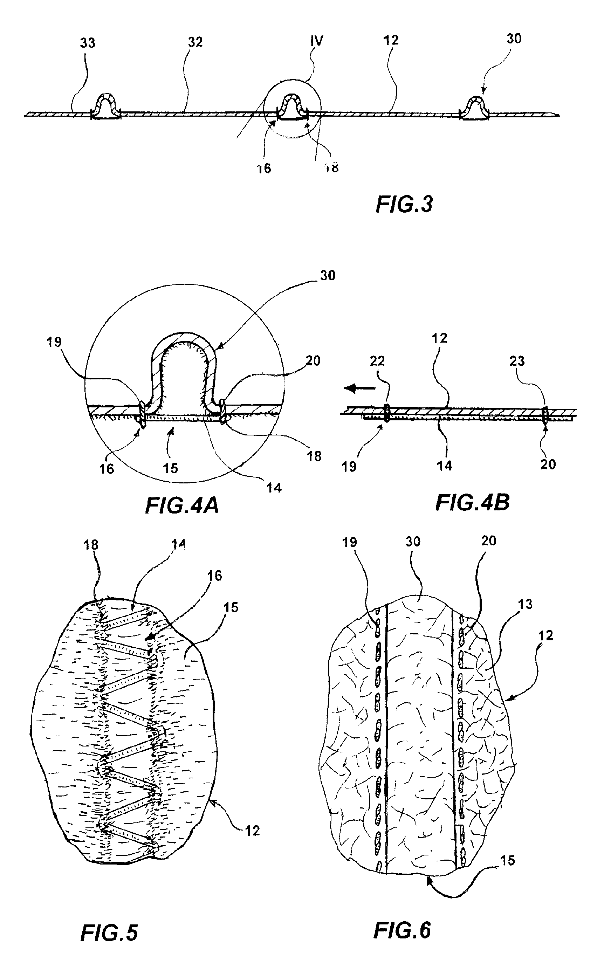

As can be clearly seen from Figures 4A and 4B, in the rest condition, the thread 14 is in a stable condition where there is no elastic deformation and exerts the pulling force on the patch 12 by means of the first fixing zone 16 and the second fixing zone 18, generating the aforementioned hump 30.

In one embodiment of the present disclosure such as that visible in the drawings, in order to provide the pulling action, a single thread 14 is used, being fixed alternately to the first fixing zone 16 and the second fixing zone 18.

For example, the thread 14 extends in a zigzag between the first fixing zone and the second fixing zone. The first fixing zone and the second fixing zone may comprise a series/sequence of connection points which define a fixing line for the thread.

In one embodiment of the present disclosure such as that visible in the drawings, the pulling element 14 is a sewing thread or a thread-like sewing element suitable for use as a sewing thread. Basically, in accordance with an embodiment of the present disclosure, the at least partially elastic thread is a sewing thread and can therefore be easily fixed by means of a sewing machine to the patch 12. The connection between the sewing thread and the thread may be achieved using a known technique. For example it may consist of an interlaced, knotted or tied connection between the threads.

In one embodiment of the present disclosure such as that visible in the drawings, the first fixing zone 16 and the second fixing zone 18 each include a sewing line 19, 20. Each seam 19, 20 includes a thread 22, 23 designed to be engaged with the thread 14. Basically the thread of the seam 19, 20 engages directly with the thread 14 which is located on the second face 15 of the patch 12.

Even more particularly, the thread 22, 23 of the seam 19, 20 is sewn onto the patch 12 passing between the first face 13 and the second face of the patch 15 and is tied or interlaced together with the thread 14 on the second face 15.

It is to be understood that the same result may be obtained in the case of a single closed-loop seam in which opposite portions of a seam act as a first fixing zone 16 and a second fixing zone 18.

In one embodiment of the present disclosure, the elasticized structure comprises a plurality of tensioning threads 14 structurally independent of each other and able to define a corresponding number of humps 30 on the decorative side of the patch.

In the example there therefore exists an elasticized structure 1 which envisages a plurality of tensioning threads 14 which are structurally independent of each other and which also may be fixed spaced from each other. In fact, in the case where a sewing machine is used, the tensioning threads 14 may be easily joined to the patch 12 also in distant zones.

A first advantage of the elasticized structure 1 described above consists in the fact that, owing to the structural independence of the tensioning threads 14, the humps 30 are separated by flat sections 32, 33 and may be formed with a variable, even dispersed distribution and/or with different orientations, depending on the needs and depending on the aesthetic effect which is to be obtained. Examples of different distributions or different patterns as regards the distribution of the seams 19, 20 and the humps 30 are shown in Figures 1, 7 and 8. In other words, the humps may be spread out along the article and the spread-out distribution does not constitute an obstacle for formation of the humps since, for example, it may be sufficient to use tensioning threads independent of each other for each hump.

A further advantage consists in the fact that, since it is possible to spread out the humps 30 so that they spaced from each other, it is not required to thin the leather and it is possible to use as a patch 12 a patch of sufficient thickness to provide suitable protection, for example compatible with use in motorcyclist suits.

A further advantage of the elasticized structure 1 thus formed consists in the fact that it is also possible to provide a single hump 30 in a zone of a garment where better adherence is required and where the presence of a single hump 30 may have a low visual impact and does not affect in an evident manner the external appearance of the garment.

A further advantage consists in the fact that the humps 30 may be formed in a zone of a motorcyclist's suit where a rigid protection element is present. The presence of the elasticized structure 1 enables the adherence of the rigid protection element to the user's body to be improved (adapting if necessary the size of the suit) and enables the rigid protection element to be kept in a fixed condition with respect to said user so as to provide improved protection in the event of a fall.

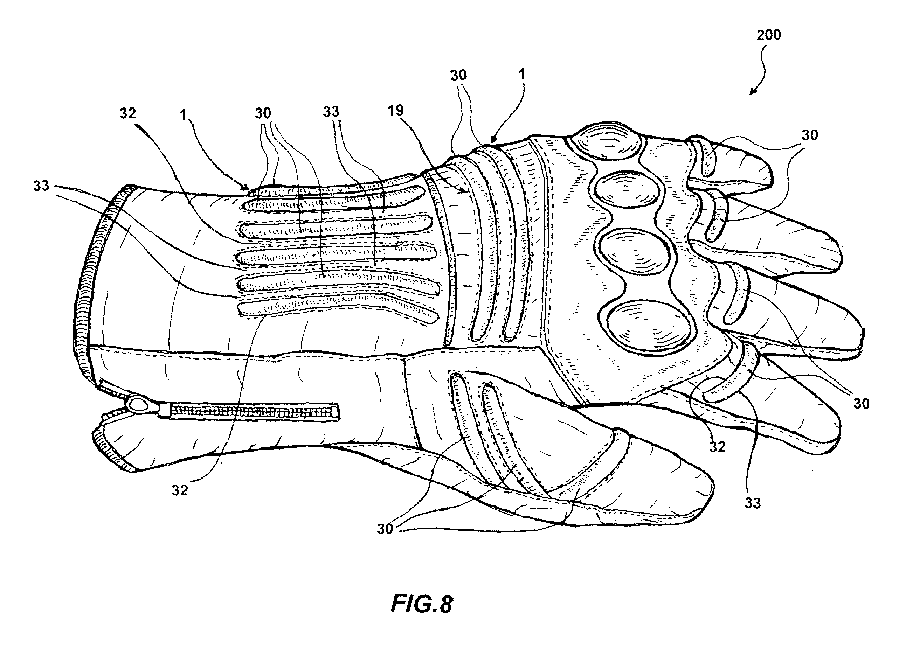

For example, Figure 8 shows a garment, in the example a motorcyclist's suit 100, including a plurality of elasticized structures 1 according to the present disclosure, located in or close to rigid protection elements 70 of the shoulders, the knees and the elbows. Each elasticized structure 1 includes a patch which forms an outer leather layer of the motorcyclist's suit 100 and a plurality of concealed internal tensioning threads 14 in the region of the humps 30. These elasticized structures 1 ensure the adherence of the rigid protection elements 70 and therefore improve the protection.

Some elasticized structures 1 are also situated in the region of the stomach.

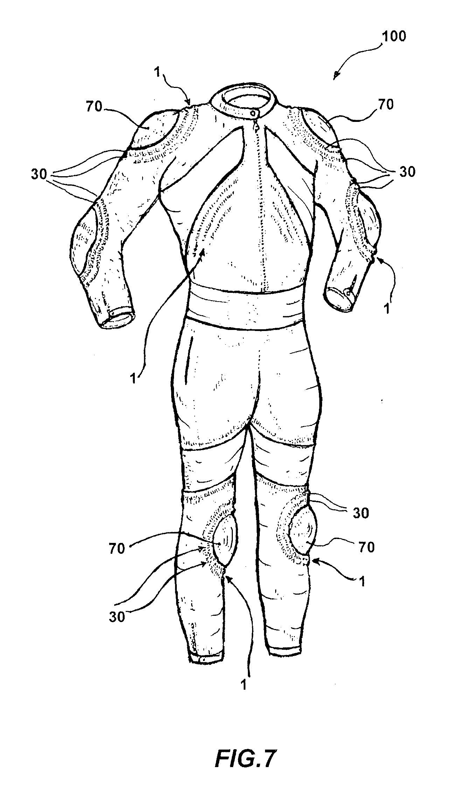

Figure 7 shows another article of clothing, such as a glove 200 including a plurality of elasticized structures 1 according to the present disclosure arranged on the back of the hand and the fingers. Each elasticized structure 1 includes a patch which forms an outer leather layer of the glove 200 and a plurality of concealed internal tensioning threads 14 in the region of the humps 30. It can be seen that a hump 30 is provided on each knuckle of the fingers of the glove 200. These elasticized structures 1 ensure the adherence of the glove 200 also in very small zones, such as the fingers or knuckles of a hand.

A further advantage consists in the fact that, owing to the seam 19, 20, it is possible to obtain humps 30 having a desired pattern, for example the pattern of an elongated profile such as that shown in Figure 1 or the pattern of long strips such as that shown in Figure 12. It is also possible to obtain an elasticized structure 1 in which flat regions or flat sections 32, 33 are situated between the humps 30; in other words the humps 30 protrude upwards like "islands" in a plane or from a substantially flat zone.

A process used to make an elasticized structure 1 is explained below.

When describing this process, elements and parts of the elasticized structure involved in the process and having the same function and the same structure as the elements and parts of the embodiment of the elasticized structure described above retain the same reference number and are not described again in detail.

In particular, the process envisages:
- providing a patch 12, for example a leather patch, and a thread, for example a sewing thread, made of an at least partially elastic material;
- stretching the thread 14 until the thread 14 assumes an elastically deformed condition;
- while keeping the thread 14 in the deformed condition, joining the thread to a second face 15 of the patch 12, thus obtaining a first fixing zone 16 and a second fixing zone 18 opposite to the first fixing zone, such that the thread 14 extends in an inner zone between the first fixing zone 16 and the second fixing zone 18;
- after joining the patch 12 in the first fixing zone 16 and the second fixing zone 18, releasing the thread 14 as to obtain a hump 30 of the patch 12 in the inner zone situated between the first fixing zone 16 and the second fixing zone 20.

For example, the thread 14 is tensioned so as to assume the elastically deformed condition precisely when the thread 14 is joined together with the patch 12.

It is to be understood that one or more intermediate layers, such as a fabric, a further fabric or another layer made of another material may be provided between the thread and the face 15 of the patch.

In one embodiment of the present disclosure, joining together of the thread 14 and the patch 12 is carried out performed by means of sewing. Consequently the thread 14 is stitched to the patch 12 between the first fixing zone 16 and the second fixing zone 18 in an elastically deformed condition.

In order to obtain the elasticized structure 1, for example, the first fixing zone 16 and the second fixing zone 18 are two separate lines of said seam 19, 20. Each seam 19, 20 may be formed with a double-needle sewing machine and each thread 22, 23 of said seam 19, 20 is interlaced in each case along the sewing line with the thread 14 which extends in a zigzag manner between the two seams 19, 20.

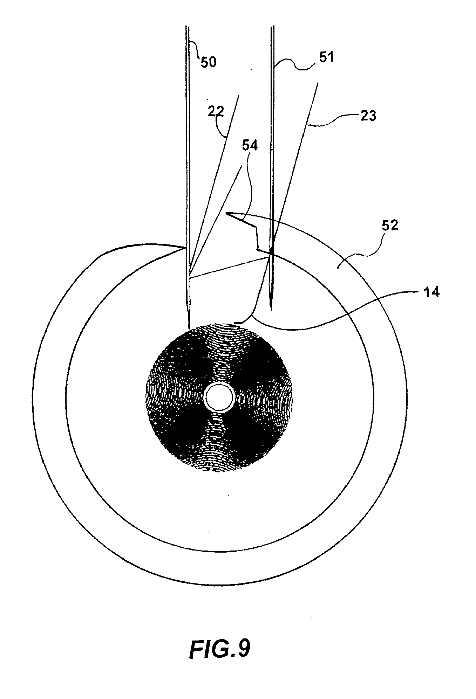

A detail of a sewing machine is illustrated by way of example in Figure 9.

The sewing machine includes two sewing needles 50, 51 arranged parallel and provided with an associated sewing thread 22, 23. The sewing machine includes a crochet hook 52 provided with thread 14, which is an at least partially elastic thread. The two needles 50, 51 are moved together with a reciprocating vertical movement. The sewing thread 22, 23 of each sewing needle 50, 51 is taken up by the same end 54 of the crochet hook 52. In other words, the crochet hook 52 is configured to take up the thread 22, 23 of both the needles 50, 51.

Even more particularly, the sewing machine is configured to take up both the sewing threads 22, 23 in the same position/height and obtain two identical seams. For this purpose, considering the rotational movement of the crochet hook 52, which in fact encounters the needles 50, 51 in succession, the needle 50 which is encountered subsequently by the end of the crochet hook 52 is a few millimetres lower than the other needle 51. In this way, for example the sewing thread 22 of the needle 51, which is encountered first by the end of the crochet hook 52, is taken up when the needle 51 reaches a bottom dead centre point beyond which the needle moves back upwards, while the sewing thread 22 of the needle 50, which is encountered subsequently by the end of the crochet hook 52, is taken up when the needle 50 has passed beyond the bottom dead centre point and is already moving back upwards.

It should be understood that the different heights of the needles 50, 51 may be modified on the basis of the dimensions of the thread, the distances between the needles and the speed of rotation of the crochet hook 52.

It should also be understood that the production and use of a double-needle sewing machine described here lies within the competence of a person skilled in the art who is able to make all the necessary adaptations and modifications to the sewing machine in order to obtain the desired result in accordance with the embodiments of the present disclosure.

It should also be understood that the double-needle sewing machine described here represents one of the many possibilities within the competence of a person skilled in the art for obtaining an elasticized structure in accordance with the present disclosure and that a person skilled in the art may be able to imagine other devices for obtaining an elasticized structure such as that described in the present disclosure, namely a structure provided with a thread able to exert a pulling action on the patch in a region situated between a first zone for fixing the thread to the patch and a second zone for fixing the thread to the patch.

The subject-matter of the present disclosure has been described hitherto with reference to preferred embodiments thereof. It is to be understood that other embodiments relating to the same inventive idea may exist, all of these falling within the scope of protection of the claims which are illustrated hereinbelow.

## Claims

1. Elasticized structure (1), including
a patch (12) having a first face (13) and a second face (15); and a thread (14) made of an at least partially elastic material, wherein:
a first portion, region or point of the thread (14) is fixed to the second face (15) of the same patch (12) in at least one first fixing zone (16) and a second portion, region or point of said thread (14) is fixed to the second face (15) of the same patch (12) in at least one second fixing zone (18),
said elasticized structure (1) is adapted to assume a tensioned position and a rest position, wherein, in said tensioned position, the patch (12) is in a condition at least partially stretched and the thread (14) is in a condition of elastic deformation, and wherein, in said rest position, said thread (14) exerts a pulling force on the patch (12) by means of, or between, the first fixing zone (16) and the second zone fixing (18), and, following said pulling action of the same thread (14), the patch (12) has a hump (30) situated between the first fixing zone (16) and the second fixing zone (18).

2. Elasticized structure (1) according to claim 1, wherein, in said rest position, the thread (14) is in a stable condition of absence of elastic deformation and wherein, in said rest position, a direction along which a pulling action by the thread (14) is active is a direction coinciding with a direction of a portion of said thread (14) comprised between the first portion, region or point of the thread (14) and the second portion, region or point of said thread (14).

3. Elasticized structure (1) according to claim 1 or claim 2, wherein the thread is a body extending in a longitudinal direction or length and the first portion, region or point of the thread (14) and the second portion, region or point of said thread (14) are consecutive or adjacent portions of the same thread along said longitudinal direction or length.

4. Elasticized structure (1) according to claim 1, 2 or 3, wherein the thread (14) is a single thread or element arranged in a zigzag or with a sinusoidal pattern between a series or row of first fixing zones (16) and a series or row of second fixing zones (18) or wherein the same thread (14) is a single element fixed to the patch alternately in the first fixing zone (16) of a series or row of first fixing zones (16) and the second fixing zone (18) of a series or row of second fixing zones (18).

5. Elasticized structure (1) according to any one of the preceding claims, wherein, in order to exert a pulling force, a single sewing thread or a thread-like sewing element, or a single filament obtained by joining or grouping together several threads, suitable for use as a sewing thread, is provided.

6. Elasticized structure (1) according to any one of the preceding claims, wherein the first fixing zone (16) and/or the second fixing zone (18) are a seam (19, 20), said seam (19, 20) including a sewing thread (22, 23) adapted to be engaged with the thread (14).

7. Elasticized structure (1) according to claim 6, the thread (22, 23) of the seam (19, 20) is sewn onto the patch (12) between the first face (13) and the second face (15) of the patch (12) and is bound to the thread (14) on the second face (15) of the patch (12).

8. Elasticized structure (1) according to claim 6 or 7, wherein the seam defines a closed loop, wherein opposite portions of said closed-loop seam act as first fixing zone (16) and second fixing zone (18).

9. Elasticized structure (1) according to any one of the preceding claims 1 to 7, wherein the first fixing zone (16) and/or the second fixing zone (18) each include a plurality of connection points arranged in series or in sequence between the thread (14) and the patch (12).

10. Elasticized structure (1) according to any one of the preceding claims, comprising a plurality of said pulling elements (14), said pulling elements (14) being structurally independent of each other.

11. Elasticized Structure (1) according to any one of the preceding claims, wherein the patch (12) is made of leather.

12. Process for making an elasticized structure (1), as defined in any one of the preceding claims and/or wherein the process comprises the steps of
- providing a patch (12) and a thread (14) made of an at least partially elastic material;
- stretching the thread (140) until the thread (14) assumes an elastically deformed condition;
- while keeping the thread (14) in the deformed condition, joining the thread to a face (15) of the patch (12) in a first region, obtaining a first fixing zone (16, 19) and joining the same thread to a face (15) of the patch (12) in a second region, obtaining a second fixing zone (18, 20), said thread (14) extending in an inner zone (15) between said first fixing zone (16, 19) and said second fixing zone (18, 20);
- after joining with the patch (12) in the first fixing zone (16, 19) and the second fixing zone (18, 19), releasing the thread (14) so as to obtain a hump (30) of the patch (12) in the inner zone situated between said first fixing zone (16, 19) and said second fixing zone (18, 20).

13. Process according to claim 12, wherein joining together of the thread (14) and the patch (12) is carried out by means of sewing (19, 20).

14. Process according to claim 13, wherein the thread (14) is stretched to assume the elastically deformed condition when the thread (14) is joined together with the patch (12).

15. Process according to either one of the preceding claims 13 or 14, wherein each seam (19, 20) is made with a double-needle sewing machine and wherein each thread (22, 23) of said seam (19, 20) is tied, joined or interlaced with the thread (14).

16. Process according to claim 15, wherein the thread of the seam (19, 20) is sewn onto the patch (12) on the side of an outer face (13) of the patch (12) and engages with the thread (14) on said face of the patch (12).

17. Clothing item (100, 200) including an elasticized structure (1) according to any one of claims 1 to 11 or obtainable according to a process according to any one of the preceding claims 12 to 16.
